Europäisches Patentamt

European Patent Office

Office européen des brevets

(19)

(11) **EP 1 159 643 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(21) Anmeldenummer: **00912561.8**

(22) Anmeldetag: **07.03.2000**

(51) Int Cl.[7]: **G02B 23/24**

(86) Internationale Anmeldenummer:
**PCT/EP00/01980**

(87) Internationale Veröffentlichungsnummer:
**WO 00/054089 (14.09.2000 Gazette 2000/37)**

(54) **BILDÜBERTRAGUNGSSYSTEM FÜR ENDOSKOPE SOWIE VERFAHREN ZUR HERSTELLUNG EINER STABLINSE**

IMAGE TRANSMISSION SYSTEM FOR ENDOSCOPES AND METHOD OF PRODUCING A ROD LENS

SYSTEME DE TRANSMISSION D'IMAGES POUR ENDOSCOPES ET PROCEDE DE PRODUCTION D'UNE LENTILLE EN FORME DE BARRE

(84) Benannte Vertragsstaaten:
**DE FR GB IT**

(30) Priorität: **08.03.1999 DE 19910050**

(43) Veröffentlichungstag der Anmeldung:
**05.12.2001 Patentblatt 2001/49**

(73) Patentinhaber: **Karl Storz GmbH & Co. KG
78532 Tuttlingen (DE)**

(72) Erfinder: **LEI, Fang
D-78591 Durchhausen (DE)**

(74) Vertreter: **Hofmeister, Frank Horst
Kleiststrasse 7
40878 Ratingen (DE)**

(56) Entgegenhaltungen:
**EP-A- 0 452 053    GB-A- 1 443 150
GB-A- 2 081 923    US-A- 4 168 882
US-A- 4 391 621    US-A- 4 961 802
US-A- 5 805 345**

- **DATABASE WPI Section PQ, Week 198020 Derwent Publications Ltd., London, GB; Class P31, AN 1980-E4973C XP002140300 & SU 686 725 A (MEDICAL INSTR RES), 28. September 1979 (1979-09-28)**
- **PATENT ABSTRACTS OF JAPAN vol. 007, no. 010 (P-168), 14. Januar 1983 (1983-01-14) & JP 57 168212 A (OLYMPUS KOGAKU KOGYO KK), 16. Oktober 1982 (1982-10-16)**

**Beschreibung**

Die Erfindung betrifft ein Bildübertragungssystem für Endoskope und dgl. Sehrohre zur Bildübertragung eines von einem Objektiv in einer ersten Zwischenbildebene erzeugten Zwischenbildes von einer Zwischenbildebene zur jeweils nächsten Zwischenbildebene, mit zwei Stablinsen und mindestens einem weiteren Linsensystem.

Derartige auch Relaislinsensysteme genannte Bildübertragungssysteme werden insbesondere für Endoskope, aber auch für andere Sehrohre wie Technoskope, Cystoskope, Periskope und dgl. verwendet. Endoskope bestehen aus einem Okularteil, der das Okular enthält, sowie einem länglichen Schaft, in dem weitere optische Bauteile untergebracht sind. Bei diesen weiteren optischen Bauteilen handelt es sich um das am vorderen (distalen) Ende des Endoskopes befindliche Objektiv und um Bildübertragungs- bzw. Relaislinsensysteme. Das Objektiv nimmt die zu beobachtende Szene auf und entwirft in einer ersten Zwischenbildebene ein Zwischenbild. Dieses Zwischenbild wird von einem Bildübertragungs- bzw. Relaislinsensystem erneut abgebildet und in die nächste Zwischenbildebene weitergeleitet, von wo ein weiteres Bildübertragungs- bzw. Relaislinsensystem die Weiterleitung zur nächsten Zwischenbildebene übernimmt, bis das Bild zum Okular gelangt.

Die Verwendung von Stablinsen zur Ausbildung von Bildübertragungssystemen ist erstmals von Prof. Hopkins in der GB-PS 954 629 vorgeschlagen worden. Gemäß diesem grundsätzlichen Vorschlag von Prof. Hopkins besteht jedes Bildübertragungssystem aus zwei bikonvexen stabförmigen Linsen und wenigstens zwei weiteren Meniskuslinsen. Durch die Kombination von stabförmigen bikonvexen Linsen mit Meniskuslinsen läßt sich zum einen eine große Bildhelligkeit erzielen, zum anderen lassen sich die bei Bildübertragungssystemen störenden Bildfehler wie Astigmatismus und Bildfeldkrümmung hinreichend gut kompensieren.

Ausgehend von den Arbeiten von Prof. Hopkins sind in der Folge eine Vielzahl von abgewandelten Bildübertragungssystemen entwickelt und beschrieben worden, bei denen ebenfalls stabförmige Linsenelemente verwendet wurden.

Ein solches weiteres Bildübertragungssystem ist beispielsweise aus der EP-B1-0 310 640 bekannt. Bei diesem bekannten weiterentwickelten Bildübertragungssystem bestehen die Stablinsen aus konvex/konkaven Linsen, deren konkaven Flächen der Mittelebene zugekehrt sind und die mit jeweils einem weiteren Linsensystem verkittet sind. Die weiteren Linsensysteme sind bikonvexe Einzellinsen, wobei die konkaven Flächen der Stablinsen jeweils mit einer der konvexen Flächen der weiteren Linsensysteme verkittet sind. Dieses bekannte Bildübertragungssystem ermöglicht zwar eine gute Korrektur des Astigmatismus und der Bildfeldkrümmung, jedoch weisen die konventionellen Stablinsen den Nachteil auf, daß sie im allgemeinen über zwei sphärische Endflächen verfügen, die individuell angefertigt und mindestens noch an eine weitere Linse angekittet sind. Dies erfordert einen aufwendigen und kostenintensiven Fertigungsprozeß.

Ein weiteres Bildübertragungssystem ist aus der EP 0452 053 A1 bekannt. Bei diesem bekannten Linsensystem besteht jedes Relaislinsensystem aus jeweils zwei identisch aufgebauten Linsensystemen mit einer mittleren bikonvexen Linse und zwei mit dieser mittleren Linse verkitteten konvex/konkaven Linsen. Die bikonvexe Mittellinse kann bei diesem bekannten Linsensystem aus einer Glaskugel hergestellt sein, aus der durch geeignete Bearbeitungsverfahren, wie beispielsweise polieren, ein zylindrischer Stab mit zwei konvexen Endflächen hergestellt wird. Aufgrund der vielen sphärischen Kittflächen zwischen den Mittellinsen und den mit diesen verbundenen konvex/konkaven Linsen ist auch dieses bekannte Linsensystem nur sehr aufwendig herzustellen, da die miteinander zu verbindenden Flächen äußerst exakt bearbeitet werden müssen.

Das Problem der vielen sphärischen Kittflächen tritt auch bei dem aus Fig.8 der US-PS 5 097 359 bekannten Bildübertragungssystem auf, bei dem zwei bikonvexe Linsen über eine bikonkave Mittellinse miteinander verbunden sind und beide bikonvexen Linsen endseitig jeweils mit einer konvex/konkaven Linse verbunden sind.

Ein weiteres Bildübertragungssystem ist aus der GB 2 081 923 A bekannt. Dieses bekannte System weist eine aus einem Lichtleiterbündel bestehende Optik auf, an deren dem zu betrachtenden Gegenstand zugewandten distalen Ende ein aus zwei Linsen bestehendes Objektiv und an derem dem Auge zugewandten proximalen Ende ein Okular angeordnet ist. Das Lichtleiterbündel selbst weist keine weiteren Linsensysteme auf, so daß eine Weiterleitung des vom Objektiv erzeugten Zwischenbilds über verschiedene Zwischenbildebenen nicht stattfindet. Statt dessen wird mittels des Objektivs ein Zwischenbild auf die Eingangsfläche der Lichtleiterbündel projiziert und mittels des als Lupe wirkenden Okulars das auf der Ausgangsfläche des Lichtleiterbündels entstehende Bild betrachtet.

Ausgehend von diesem Stand der Technik liegt der Erfindung die **Aufgabe** zugrunde, ein Bildübertragungssystem der eingangs genannten Art zu schaffen, das mit möglichst einfachen Stablinsen herzustellen ist und eine gute Korrektur der Bildfeldkrümmung gewährleistet. Verfahrensmäßig liegt der Erfindung die Aufgabe zugrunde, ein einfach zu handhabendes und wirtschaftlich arbeitendes Verfahren zur Herstellung einer Stablinse für ein Bildübertragungssystem bereitzustellen.

Die produktmäßige **Lösung** dieser Aufgabenstellung ist erfindungsgemäß dadurch gekennzeichnet, daß die zwei Stablinsen als plankonvexe Linsen gleicher Länge ausgebildet sind, deren Längen jeweils dem Krümmungsradius ihrer konvexen Endflächen entsprechen, wobei die plane Endfläche mindestens einer der plankonvexen Stablinsen den Anfang und/oder das Ende des jeweiligen Bildübertragungssystems bildet und beide Stablinsen mit ihren konvexen Endflächen einander zugewandt angeordnet sind und das mindestens eine weitere Linsensystem zwischen den beiden Stablinsen angeordnet ist.

Gemäß einer bevorzugten Ausführungsform der Erfindung sind die Stablinsen zweier hintereinander angeordneter Bildübertragungssysteme über ihre planen Endflächen miteinander verkittet. Durch dieses direkte Aneinanderfügen zweier Stablinsen ist es möglich, eine weitere Glas-Luft-Fläche aus dem Bildübertragungssystem zu eliminieren.

Ein bedeutender Kostenvorteil und eine deutliche Vereinfachung des Produktionsprozesses kann erfindungsgemäß dadurch erzielt werden, daß zwei hintereinander angeordnete Stablinsen als einstückige bikonvexe Stablinse ausgebildet sind, deren Länge doppelt so groß ist, wie der Krümmungsradius der beiden konvexen

Endflächen, wobei eine Hälfte der bikonvexen Stablinse einem direkt benachbarten Bildübertragungssystem zuzuordnen ist. Eine solche Ausbildung zweier Stablinsen als einstückige bikonvexe Linse ist ohne wesentliche Veränderungen des Bildübertragungssystems möglich, da die planen Endflächen der Stablinsen keine optisch relevante Wirkung entfalten und so zugunsten einer einfach und kostengünstig zu fertigenden einstückigen bikonvexen Stablinse aufgegeben werden können. Im Vergleich zu konventionellen Bildübertragungssystemen ist dieses System außerdem sehr gut für die Korrektur der Bildfeldkrümmung, insbesondere in tangentialer Richtung, geeignet.

Weiterhin wird mit der Erfindung vorgeschlagen, daß das mindestens eine weitere Linsensystem symmetrisch bezüglich einer Mittelebene zwischen den beiden Stablinsen angeordnet ist.

Das mindestens eine weitere Linsensystem besteht erfindungsgemäß aus mindestens drei Linsen, wobei dieses Linsensystem vorteilhafterweise symmetrisch aufgebaut ist und die Brechkraft der beiden äußeren Linsen das entgegengesetzte Vorzeichen zu der der mindestens einen mittleren Linse hat.

Gemäß einer ersten Ausführungsform der Erfindung ist das weitere Linsensystem als aus drei miteinander verkitteten Linsen bestehendes Triplet ausgebildet. Durch diese erfindungsgemäße Ausbildung des weiteren Linsensystems als aus drei miteinander verkitteten Linsen bestehendes Triplet wird die Zahl der Glas-Luft-Flächen des Bildübertragungssystems weiter reduziert.

Gemäß einer zweiten Ausführungsform des erfindungsgemäßen Bildübertragungssystems wird vorgeschlagen, daß das weitere Linsensystem als zwei aus jeweils zwei miteinander verkitteten Linsen bestehende Dublets ausgebildet ist. Dabei kann zwischen den Dublets ein Luftabstand vorgesehen sein. Als alternative Variante zur Ausbildung des mindestens einen weiteren Linsensystems als Triplet weist die Verwendung der beiden Dublets zwar zwei zusätzliche Glas-Luft-Flächen und somit einen Reflektionsverlust der Lichtenergie auf, jedoch ist auch diese Ausgestaltungsform des Bildübertragungssystems aufgrund der Verwendung der erfindungsgemäßen Stablinsen kostengünstig und einfach herstellbar und weist eine sehr gute Korrektur der Bildfeldkrümmung auf.

Die Form der mittleren Linse (beim Triplet) bzw. der mittleren Linsen (bei den Dublets) hängt von der gewählten Glassorte ab. Gemäß einer ersten praktischen Ausführungsform sind unter der Bedingung

$$n_m < n_a$$

die äußeren Linsen des weiteren Linsensystems als konvex/konkave Meniskuslinsen und die eine (Triplet) oder zwei (Dublets) mittlere(n) Linse(n) als bikonvexe Linse(n) ausgebildet, wobei $n_m$ der Brechungsindex der mittleren Linse(n) und $n_a$ der Brechungsindex der äußeren Linsen ist.

Unter der Bedingung

$$n_m > n_a$$

sind gemäß einer zweiten praktischen Ausführungsform die äußeren Linsen des weiteren Linsensystems als bikonvexe Linsen und die eine (Triplet) oder zwei (Dublets) mittlere(n) Linse(n) als bikonkave Linse(n) ausgebildet, wobei $n_m$ der Brechungsindex der mittleren Linse(n) und $n_a$ der Brechungsindex der äußeren Linsen ist.

Gemäß einer besonders vorteilhaften Ausführungsform des als Triplet ausgebildeten weiteren Linsensystems ist die mittlere Linse des weiteren Linsensystems als bikonvexe Linse ausgebildet, deren Länge doppelt so groß ist wie der Krümmungsradius ihrer beiden Endflächen. Ebenso wie bei der Ausbildung der Stablinsen als einstückige bikonvexe Linsen ist auch die Ausbildung der mittleren Linse des Triplets als bikonvexe Linse besonders kostengünstig.

Durch das Verkitten der mittleren bikonvexen Linse des Triplets mit den beiden identischen äußeren Linsen bildet das Triplet quasi eine weitere Stablinse deren Blendenebene in der Mittelebene der als bikonvexe Linse ausgebildeten mittleren Linse des weiteren Linsensystems liegt.

Schließlich wird mit der Erfindung vorgeschlagen, daß aufgrund der Ausbildung der beiden Stablinsen als bikonvexe Linsen die Zwischenbilder in den Mittelebenen der als einstückige bikonvexe Linsen ausgebildeten Stablinsen liegen.

Die verfahrensmäßige Lösung der Aufgabenstellung ist erfindungsgemäß gekennzeichnet durch die Verfahrensschritte:

a) Herstellen einer Glaskugel, deren Radius dem Krümmungsradius der konvexen Endfläche der Stablinse entspricht und

b) Ausarbeiten eines bikonvexen zylindrischen Glasstabes aus der Glaskugel.

Das Herstellen einer Glaskugel stellt im Vergleich zur Herstellung langer Stablinsen mit einem kleinen Durchmesser einen relativ einfachen Vorgang dar.

Der im Verfahrensschritt b) hergestellte bikonvexe zylindrische Glasstab entspricht zwei direkt aneinander angeformten erfindungsgemäßen plankonvexen Stablinsen. Zum Ausbilden einer einzelnen Stablinse, also einer halben bikonvexen Linse, schließt sich an den Verfahrensschritt b) einer weiterer Verfahrensschritt an, in dem der zylindrische Glasstab entlang dessen Mittelebene halbiert wird.

Das Ausarbeiten des bikonvexen zylindrischen Glasstabes im Verfahrensschritt b) erfolgt dadurch, daß aus der Glaskugel ein Bohrkern entnommen wird, dessen Achse im wesentlichen durch den Mittelpunkt der Glaskugel verläuft.

Dieses erfindungsgemäße Verfahren zur Herstellung von Stablinsen bietet die größten Vorteile bei der Herstellung von Stablinsen kleiner Länge.

Weitere Merkmale und Vorteile der Erfindung ergeben sich aus der nachfolgenden Beschreibung der zugehörigen Zeichnung, in der vier Ausführungsbeispiele eines erfindungsgemäßen Bildübertragungssystems schematisch dargestellt sind. In der Zeichnung zeigt:

Fig. 1    einen beispielhaften schematischen Längsschnitt durch die Anordnung der Linsen in einem Endoskop;

Fig. 2    einen schematischen Längsschnitt durch eine erste Ausführungsform eines erfindungsgemäßen Bildübertragungssystems, bei dem das weitere Linsensystem als Triplet mit einer bikonvexen mittleren Linse und konvex/konkaven äußeren Linsen ausgestaltet ist;

Fig. 3    ein Bildübertragungssystem gemäß einer zweiten Ausführungsform, bei dem die mittlere Linse des Triplets als kugelförmige Linse ausgebildet ist;

Fig.4    eine dritte Ausführungsform eines erfindungsgemäßen Bildübertragungssystems, bei dem die mittlere Linse des Triplets als bikonkave Linse ausgebildet ist und die äußeren Linsen als bikonvexe Linsen ausgebildet sind und

Fig. 5    einen schematischen Längsschnitt durch eine vierte Ausführungsform eines erfindungsgemäßen Bildübertragungssystems, bei dem das weitere Linsensystem aus zwei Dublets besteht, deren mittleren Linsen bikonvex und deren äußeren Linsen konkav/konvex ausgebildet sind.

In der nachfolgenen Figurenbeschreibung werden bikonvexe Linsen, deren Länge doppelt so groß ist, wie der Krümmungsradius der beiden konvexen Endflächen, als Kugellinsen bezeichnet.

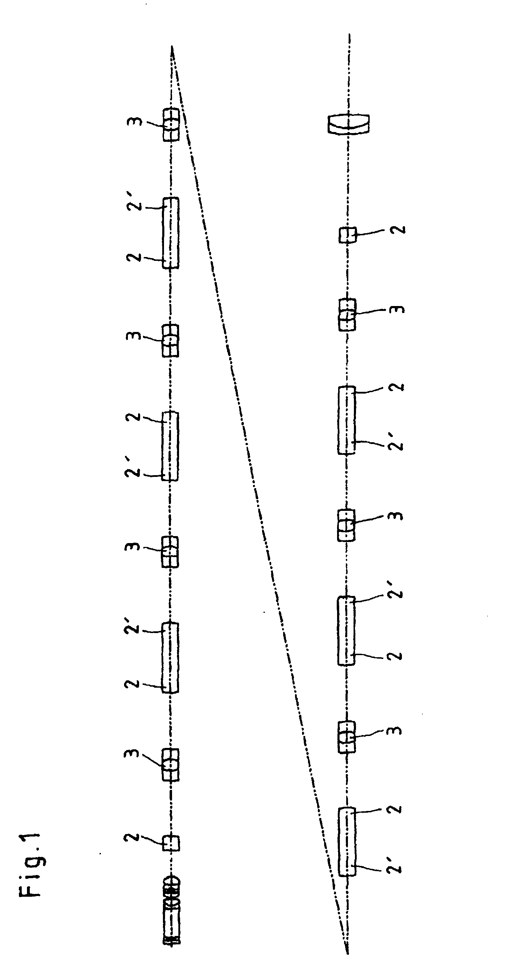

Die Abbildung Fig. 1 zeigt schematisch die vollständige Anordnung der Linsen in einem Endoskop. Das dargestellte optische System besteht aus insgesamt sieben Bildübertragungssystemen, die jeweils von einer Zwischenbildebene zur nächsten reichen. Da die Zwischenbildebenen in der Mittelebene 1 der Stablinsen 2 liegen, umfaßt daher jedes Bildübertragungssystem jeweils zwei "halbe" Stablinsen 2 und jeweils ein weiteres Linsensystem 3.

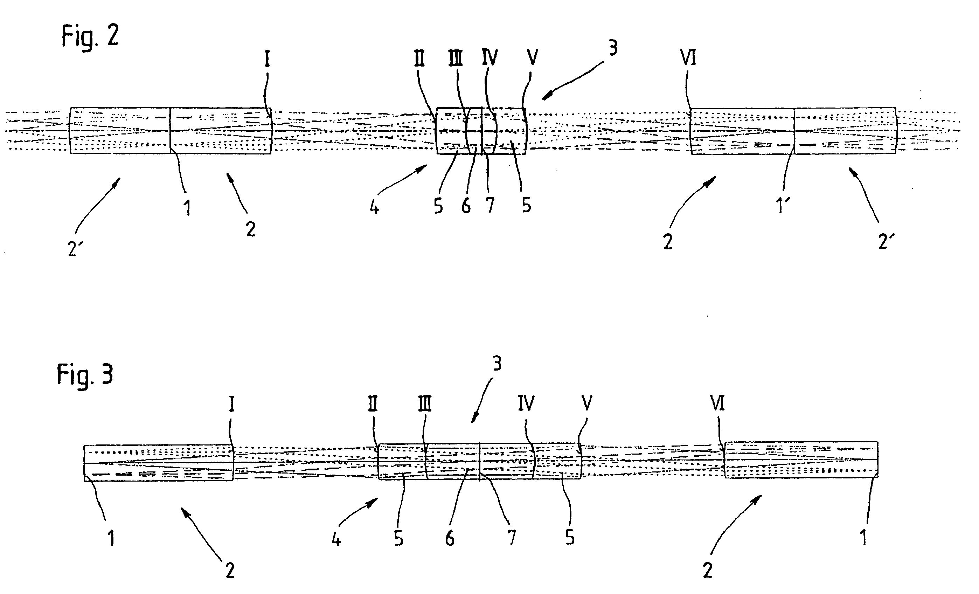

Das in Fig. 2 dargestellte Bildübertragungssystem besteht aus zwei plankonvexen, als Kugellinsen ausgebildeten Stablinsen 2 und einem als Triplet 4 ausgebildeten und symmetrisch zwischen den beiden Stablinsen 2 angeordneten weiteren Linsensystem 3. Da jedes Bildübertragungssystem aus zwei plankonvexen Stablinsen 2 besteht, sind bei der Ausführungsform gemäß Fig. 2, bei der zwei Stablinsen 2 zweier hintereinander angeordneter Bildübertragungssysteme zu einer gemeinsamen Kugellinse zusammengefaßt sind, die Bezugzeichen, die sich auf ein zweites System beziehen, mit' gekennzeichnet.

Bei der Ausbildung der Stablinsen 2 als plankonvexe Linsen bieten sich zur Ausbildung der dargestellten Bildübertragungssysteme folgende Möglichkeiten zur Anordnung und Ausbildung der Stablinsen:

a) das Bildübertragungssystem weist nur eine plankonvexe Stablinse 2 auf, wobei die plane Endfläche den Anfang oder das Ende des Bildübertragungssystems bildet;

b) das Bildübertragungssystem weist zwei plankonvexe Stablinsen 2 auf, deren planen Enden den Anfang und das Ende des Bildübertragungssystems bilden;

c) die plankonvexen Stablinsen 2 zweier direkt benachbarter Bioldübertragungssysteme sind über ihre planen Endflächen miteinander verkittet und

d) die Stablinsen 2 zweier direkt hintereinander angeordneter Bildübertragungssysteme sind als einstückige bikonvexe Stablinse ausgebildet.

Wie aus Fig. 1 ersichtich ist, sind bei dieser Ausführungsform die erste und die letzte Stablinse 2 in einem Endoskop verkürzt und somit nicht erfindungsgemäß ausgebildet, um zu vermeiden, daß eine Zwischenbildebene direkt mit der planen Endfläche dieser Stablinse 2 zusammenfällt, da Verunreinigungen dieser Fläche und/oder Beschädigungen direkt abgebildet würden.

Die die Stablinsen 2 bildenden Kugellinsen zeichnen sich dadurch aus, daß sie an beiden Endflächen den gleichen Krümmungsradius aufweisen und die Länge jeder Stablinse 2 im wesentlichen gleich dem doppelten Krümmungsradius der Endflächen der Stablinse 2 ist.

Bei dem in Fig. 2 dargestellten ersten Ausführungsbeispiel besteht das Triplet 4 des weiteren Linsensystems 3 aus zwei äußeren identischen Linsen 5, die als konkav/konvexe Meniskuslinsen ausgebildet sind. Die zwischen den beiden äußeren Linsen 5 angeordnete und mit diesen verkittete mittlere Linse 6 ist als bikonvexe Linse ausgebildet.

Ferner ist in Fig. 2 der Strahlenverlauf dargestellt. Wie aus diesem Strahlenverlauf ersichtlich, befinden sich bei der Verwendung von Kugellinsen als Stablinsen 2 die Zwischenbilder in der Mittelebene 1 der Kugellinsen. Die Blendenebene des Bildübertragungssystems befindet sich in der Mittelebene 7 der mittleren Linse 6.

Fig. 3 zeigt eine besonders vorteilhafte Ausgestaltung der Ausführungsform gemäß Fig. 2 mit einer bikonvexen mittleren Linse 6 für das Triplet 4. Bei dieser Ausgestaltungsform ist die mittlere Linse 6 ebenso wie die beiden Stablinsen 2 als Kugellinse ausgebildet, deren beide Endflächen den gleichen Krümmungsradius aufweisen und deren Länge doppelt so groß ist wie der Krümmungsradius ihrer beiden Endflächen. Die Blendenebene des Bildübertragungssystems befindet sich in der Mittelebene 7 der als Kugellinse ausgebildeten mittleren Linse 6.

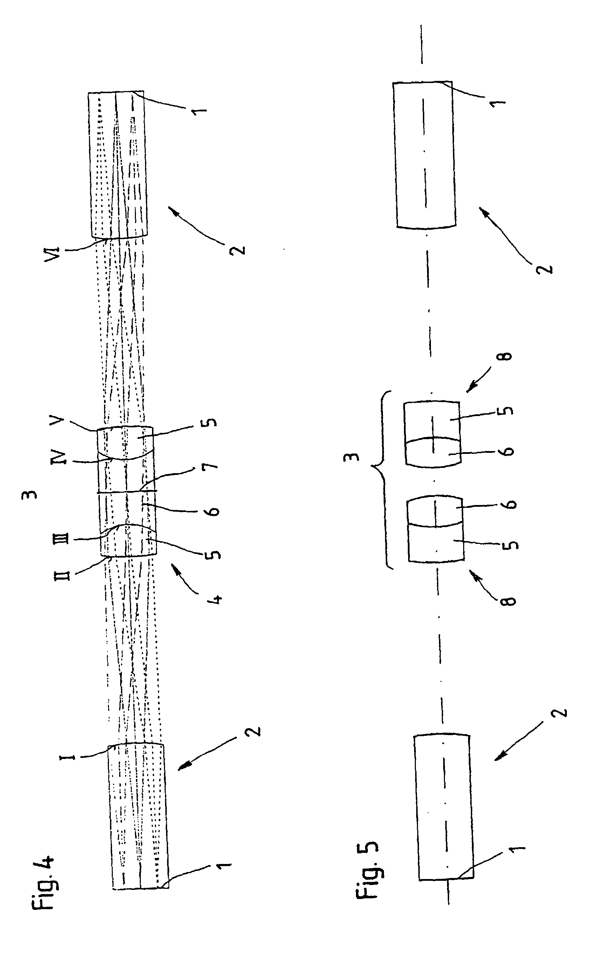

Bei der Darstellung gemäß Fig. 3 sowie den Darstellungen gemäß Fig. 4 und 5 sind aus Gründen einer übersichtlicheren Darstellung die beiden als Kugellinsen ausgebildeten Stablinsen nur zur Hälfte dargestellt, d.h., daß diese Abbildungen jeweils ein komplettes Bildübertragungssystem darstellen.

Während ein Triplet 4 mit einer bikonvexen mittleren Linse 6 und zwei äußeren konvexen/konkaven Linsen 5 verwendet wird, wenn der Brechungsindex $n_m$ der mittleren Linse 6 kleiner ist als der Brechungsindex $n_a$ der äußeren Linsen 5, wird bei einer umgekehrten Beziehung die mittlere Linse 6 als bikonkave Linse ausgebildet und sind die äußeren Linsen 5 als bikonvexe Linsen ausgebildet, wie dies in Fig. 4 dargestellt ist.

Die in Fig. 5 dargestellte vierte Ausführungsform eines Bildübertragungssystems unterscheidet sich von den Ausführungen gemäß Fig. 2 bis 4 dadurch, daß das symmetrisch zwischen den beiden Stablinsen 2 angeordnete weitere Linsensystem 3 nicht als Triplet 4 ausgebildet ist, sondern aus zwei mit Abstand zueinander angeordneten Dublets 8 besteht. Bei dem dargestellten Ausführungsbeispiel bestehen die äußeren Linsen 5 aus konvex/konkaven Meniskuslinsen, während die mittleren Linsen 6 als bikonvexe oder plankonvexe Linsen ausgebildet sind. Selbstverständlich ist es auch hier in Abhängigkeit vom Brechungsindex $n_m$ der mittleren Linsen 6 in Beziehung zum Brechungsindex $n_a$ der äußeren Linsen 5 möglich, die äußeren Linsen 5 als bikonvexe oder plankonvexe Linsen auszubilden, während die inneren Linsen 6 als bikonkave, plankonkave, plankonvexe oder konvex/konkave Linsen ausgebildet sind.

Nachstehend werden für die in den Abbildungen Fig. 2 bis 4 dargestellten Ausführungsformen jeweils zwei konkrete Ausführungsbeispiele vorgestellt. Die Ausführungsbeispiele in den Tabellen 1 und 2 beziehen sich auf eine Ausführungsform gemäß Fig. 2, die Ausführungsbeispiele gemäß den Tabellen 3 und 4 auf die Ausführungsform gemäß Fig. 3 und die Ausführungsbeispiele gemäß den Tabellen 5 und 6 auf die Ausführungsform gemäß Fig. 4. Die in den Tabellen angegebenen optisch wirksamen Flächen sind in den Abbildungen Fig. 2 bis 4 mit den römischen Zahlen I bis VI gekennzeichnet. Die Werte für die Abbe'schen Zahlen sind in den Tabellen auf eine Stelle nach dem Komma gerundet. Unter Verwendung üblicher Optik-Design-Programme lassen sich die genauen Zahlenwerte sowie Variationen dieser angegebenen Werte leicht ermitteln.

Tabelle 1

| Fläche | Radius | Dicke | Brechungsindex | Abbe'sche Zahl |
|---|---|---|---|---|
|  |  |  |  |  |
| 1 | (plan) |  |  |  |

Tabelle 1   (fortgesetzt)

| Fläche | Radius | Dicke | Brechungsindex | Abbe'sche Zahl |
|---|---|---|---|---|
|  |  | 4,664 | 1,52 | 64,1 |
| I | -4,664 |  |  |  |
|  |  | 7,5 | Luft | --- |
| II | 5,158 |  |  |  |
|  |  | 1,4 | 1,85 | 32,2 |
| III | 2,585 |  |  |  |
|  |  | 1,44 | 1,62 | 53,1 |
| IV | -2,585 |  |  |  |
|  |  | 1,4 | 1,85 | 32,2 |
| V | -5,158 |  |  |  |
|  |  | 7,5 | Luft | --- |
| VI | 4,664 |  |  |  |
|  |  | 4,664 | 1,52 | 64,1 |
| 1' | (plan) |  |  |  |

Tabelle 2

| Fläche | Radius | Dicke | Brechungsindex | Abbe'sche Zahl |
|---|---|---|---|---|
|  |  |  |  |  |
| 1 | (plan) |  |  |  |
|  |  | 4,664 | 1,52 | 64,1 |
| I | -4,664 |  |  |  |
|  |  | 7,36 | Luft | --- |
| II | 6,467 |  |  |  |
|  |  | 1,33 | 1,85 | 32,2 |
| III | 2,661 |  |  |  |
|  |  | 2,16 | 1,72 | 47,9 |
| IV | -2,661 |  |  |  |
|  |  | 1,33 | 1,85 | 32,2 |
| V | -6,467 |  |  |  |
|  |  | 7,36 | Luft | --- |
| VI | 4,664 |  |  |  |
|  |  | 4,664 | 1,52 | 64,1 |
| 1' | (plan) |  |  |  |

Tabelle 3

| Fläche | Radius | Dicke | Brechungsindex | Abbe'sche Zahl |
|---|---|---|---|---|
|  |  |  |  |  |
| 1 | (plan) |  |  |  |

Tabelle 3   (fortgesetzt)

| Fläche | Radius | Dicke | Brechungsindex | Abbe'sche Zahl |
|---|---|---|---|---|
| | | 8,785 | 1,62 | 36,4 |
| I | -8,785 | | | |
| | | 8,36 | Luft | --- |
| II | 6,300 | | | |
| | | 2,77 | 1,85 | 32,2 |
| III | 3,208 | | | |
| | | 6,416 | 1,57 | 57,5 |
| IV | -3,208 | | | |
| | | 2,77 | 1,85 | 32,2 |
| V | -6,300 | | | |
| | | 8,36 | Luft | --- |
| VI | 8,785 | | | |
| | | 8,785 | 1,62 | 36,4 |
| 1' | (plan) | | | |

Tabelle 4

| Fläche | Radius | Dicke | Brechungsindex | Abbe'sche Zahl |
|---|---|---|---|---|
| | | | | |
| 1 | (plan) | | | |
| | | 7,286 | 1,52 | 64,1 |
| I | -7,286 | | | |
| | | 9,88 | Luft | --- |
| II | 11,800 | | | |
| | | 3,0 | 1,85 | 32,2 |
| III | 2,943 | | | |
| | | 5,886 | 1,81 | 40,6 |
| IV | -2,943 | | | |
| | | 3,0 | 1,85 | 32,2 |
| V | -11,800 | | | |
| | | 9,88 | Luft | --- |
| VI | 7,286 | | | |
| | | 7,286 | 1,52 | 64,1 |
| 1' | (plan) | | | |

Tabelle 5

| Radius | Fläche | Dicke | Brechungsindex | Abbe'sche Zahl |
|---|---|---|---|---|
| | | | | |
| (plan) | 1 | | | |

Tabelle 5  (fortgesetzt)

| Radius | Fläche | Dicke | Brechungsindex | Abbe'sche Zahl |
|--------|--------|-------|----------------|----------------|
|        |        | 5,309 | 1,62 | 36,4 |
| -5,309 | I      |       |      |      |
|        |        | 6,89  | Luft | --- |
| 6,923  | II     |       |      |      |
|        |        | 1,2   | 1,64 | 60,1 |
| - 1,693 | III   |       |      |      |
|        |        | 2,4   | 1,66 | 50,9 |
| 1,693  | IV     |       |      |      |
|        |        | 1,2   | 1,64 | 50,1 |
| -6,923 | V      |       |      |      |
|        |        | 6,89  | Luft | --- |
| 5,309  | VI     |       |      |      |
|        |        | 5,309 | 1,62 | 36,4 |
| (plan) | 1'     |       |      |      |

Tabelle 6

| Fläche | Radius | Dicke | Brechungsindex | Abbe'sche Zahl |
|--------|--------|-------|----------------|----------------|
|        |        |       |      |      |
| 1      | (plan) |       |      |      |
|        |        | 5,085 | 1,62 | 36,4 |
| I      | -5,085 |       |      |      |
|        |        | 6,71  | Luft | --- |
| II     | 6,043  |       |      |      |
|        |        | 1,00  | 1,72 | 50,4 |
| III    | -2,512 |       |      |      |
|        |        | 2,40  | 1,81 | 40,6 |
| IV     | 2,512  |       |      |      |
|        |        | 1,00  | 1,72 | 50,4 |
| V      | -6,043 |       |      |      |
|        |        | 6,71  | Luft | --- |
| VI     | 5,085  |       |      |      |
|        |        | 5,085 | 1,62 | 36,4 |
| 1'     | (plan) |       |      |      |

Die solchermaßen ausgebildeten Bildübertragungssysteme zeichnen sich dadurch aus, daß durch die Verwendung von Kugellinsen als Stablinsen 2 die Bildübertragungssysteme einfach und kostengünstig herstellbar sind und dabei eine besonders gute Korrektur der Bildfeldkrümmung erreicht wird.

Ergänzend zu den dargestellten und beschriebenen Ausführungsbeispielen wird darauf hingewiesen, daß selbstverständlich jederzeit optisch nicht wirksame Flächen, insbesondere Planflächen, in das Bildübertragungssystem eingefügt werden können, ohne den Rahmen der Erfindung zu verlassen. Damit können beispielsweise die einzelnen Linsen auch aus mehreren Teilen aufgebaut sein. Die notwendigen Anpassungen der Daten der jeweils anderen Linsen bei der Verwendung mehrteiliger Linsen und/oder der Anordnung eines Luftspalts zwischen zwei Linsen können in bekannter Weise mit handelsüblichen Optik-Design-Programmen erfolgen.

Bezugszeichenliste

| 1,1' | Mittelebene |
|---|---|
| 2, 2' | Stablinse |
| 3 | weiteres Linsensystem |
| 4 | Triplet |
| 5 | äußere Linse |
| 6 | mittlere Linse |
| 7 | Mittelebene |
| 8 | Dublett |
| I | Fläche |
| II | Fläche |
| III | Fläche |
| IV | Fläche |
| V | Fläche |
| VI | Fläche |

**Patentansprüche**

1. Bildübertragungssystem für Endoskope und dgl. Sehrohre zur Bildübertragung eines von einem Objektiv in einer ersten Zwischenbildebene erzeugten Zwischenbildes von einer Zwischenbildebene zur jeweils nächsten Zwischenbildebene, mit zwei Stablinsen (2) und mindestens einem weiteren Linsensystem (3),
wobei
die zwei Stablinsen (2) als plankonvexe Linsen gleicher Länge ausgebildet sind, deren Längen jeweils dem Krümmungsradius ihrer konvexen Endflächen entsprechen, wobei die plane Endfläche mindestens einer der plankonvexen Stablinsen (2) den Anfang und/oder das Ende des jeweiligen Bildübertragungssystems bildet und beide Stablinsen (2) mit ihren konvexen Endflächen einander zugewandt angeordnet sind und das mindestens eine weitere Linsensystem (3) zwischen den beiden Stablinsen (2) angeordnet ist.

2. Bildübertragungssystem nach Anspruch 1, **dadurch gekennzeichnet, daß** das mindestens eine weitere Linsensystem (3) symmetrisch bezüglich einer Mittelebene zwischen den beiden Stablinsen (2) angeordnet ist.

3. Bildübertragungssystem nach Anspruch 1 oder 2, **dadurch gekennzeichnet, daß** das weitere Linsensystem (3) aus mindestens drei Linsen besteht.

4. Bildübertragungssystem nach Anspruch 3 , **dadurch gekennzeichnet, daß** das weitere Linsensystem (3) symmetrisch bezüglich der Mittelebene aufgebaut ist, wobei die Brechkraft der beiden äußeren Linsen (5) des weiteren Linsensystems (3) das entgegengesetzte Vorzeichen zu der der mindestens einen mittleren Linse (6) hat.

**5.** Bildübertragungssystem nach mindestens einem der Ansprüche 1 bis 4, **dadurch gekennzeichnet, daß** das weitere Linsensystem (3) als aus drei miteinander verkitteten Linsen bestehendes Triplet (4) ausgebildet ist.

**6.** Bildübertragungssystem nach mindestens einem der Ansprüche 1 bis 4, **dadurch gekennzeichnet, daß** das weitere Linsensystem (3) als zwei aus jeweils zwei miteinander verkitteten Linsen bestehende Dublets (8) ausgebildet ist.

**7.** Bildübertragungssystem nach mindestens einem der Ansprüche 3 bis 6, **dadurch gekennzeichnet, daß** unter der Bedingung

$$n_m < n_a$$

die äußeren Linsen (5) des weiteren Linsensystems (3) als konvex/konkave Meniskuslinsen und die eine (Triplet 4) oder zwei (Dublets 8) mittlere(n) Linse(n) (6) als bikonvexe oder plankonvexe Linse(n) ausgebildet sind, wobei

$n_m$ der Brechungsindex der mittleren Linse(n) (6) und
$n_a$ der Brechungsindex der äußeren Linsen (5) ist.

**8.** Bildübertragungssystem nach mindestens einem der Ansprüche 3 bis 6, **dadurch gekennzeichnet, daß** unter der Bedingung

$$n_m > n_a$$

die äußeren Linsen (5) des weiteren Linsensystems (3) als bikonvexe oder plankonvexe Linsen und die eine (Triplet 4) oder zwei (Dublets 8) mittlere(n) Linse(n) (6) als bikonkave, plankonkave oder konvex/konkave Linse(n) ausgebildet sind, wobei

$n_m$ der Brechungsindex der mittleren Linse(n) (6) und
$n_a$ der Brechungsindex der äußeren Linsen (5) ist.

**9.** Bildübertragungssystem nach Anspruch 5, **dadurch gekennzeichnet, daß** die mittlere Linse (6) des weiteren Linsensystems (3) als bikonvexe Linse ausgebildet ist, deren Länge doppelt so groß ist wie der Krümmungsradius ihrer beiden Endflächen.

**10.** Bildübertragungssystem nach Anspruch 5 oder 7, **gekennzeichnet durch** die folgenden Daten:

| Fläche | Radius | Dicke | Brechungsindex | Abbe'sche Zahl |
|--------|--------|-------|----------------|----------------|
|        |        |       |                |                |
| 1      | (plan) |       |                |                |
|        |        | 4,664 | 1,52           | 64,1           |
| I      | -4,664 -4,664 |  |              |                |
|        |        | 7,5   | Luft           | ---            |
| II     | 5,158  |       |                |                |
|        |        | 1,4   | 1,85           | 32,2           |
| III    | 2,585  |       |                |                |
|        |        | 1,44  | 1,62           | 53,1           |
| IV     | -2,585 |       |                |                |
|        |        | 1,4   | 1,85           | 32,2           |

(fortgesetzt)

| Fläche | Radius | Dicke | Brechungsindex | Abbe'sche Zahl |
|---|---|---|---|---|
| V | -5,158 | | | |
| | | 7,5 | Luft | --- |
| VI | 4,664 | | | |
| | | 4,664 | 1,52 | 64,1 |
| 1' | (plan) | | | |

**11.** Bildübertragungssystem nach Anspruch 5 oder 7, **gekennzeichnet durch** die folgenden Daten:

| Fläche | Radius | Dicke | Brechungsindex | Abbe'sche Zahl |
|---|---|---|---|---|
| | | | | |
| 1 | (plan) | | | |
| | | 4,664 | 1,52 | 64,1 |
| I | -4,664 | | | |
| | | 7,36 | Luft | --- |
| II | 6,467 | | | |
| | | 1,33 | 1,85 | 32,2 |
| III | 2,661 | | | |
| | | 2,16 | 1,72 | 47,9 |
| IV | -2,661 | | | |
| | | 1,33 | 1,85 | 32,2 |
| V | -6,467 | | | |
| | | 7,36 | Luft | --- |
| VI | 4,664 | | | |
| | | 4,664 | 1,52 | 64,1 |
| 1' | (plan) | | | |

**12.** Bildübertragungssystem nach Anspruch 9, **gekennzeichnet durch** die folgenden Daten:

| Fläche | Radius | Dicke | Brechungsindex | Abbe'sche Zahl |
|---|---|---|---|---|
| | | | | |
| 1 | (plan) | | | |
| | | 8,785 | 1,62 | 36,4 |
| I | -8,785 | | | |
| | | 8,36 | Luft | --- |
| II | 6,300 | | | |
| | | 2,77 | 1,85 | 32,2 |
| III | 3,208 | | | |
| | | 6,416 | 1,57 | 57,5 |
| IV | -3,208 | | | |

(fortgesetzt)

| Fläche | Radius | Dicke | Brechungsindex | Abbe'sche Zahl |
|--------|--------|-------|----------------|----------------|
|        |        | 2,77  | 1,85           | 32,2           |
| V      | -6,300 |       |                |                |
|        |        | 8,36  | Luft           | ---            |
| VI     | 8,785  |       |                |                |
|        |        | 8,785 | 1,62           | 36,4           |
| 1'     | (plan) |       |                |                |

**13.** Bildübertragungssystem nach Anspruch 9, **gekennzeichnet durch** die folgenden Daten:

| Fläche | Radius  | Dicke | Brechungsindex | Abbe'sche Zahl |
|--------|---------|-------|----------------|----------------|
|        |         |       |                |                |
| 1      | (plan)  |       |                |                |
|        |         | 7,286 | 1,52           | 64,1           |
| I      | -7,286  |       |                |                |
|        |         | 9,88  | Luft           | --             |
| II     | 11,800  |       |                |                |
|        |         | 3,0   | 1,85           | 32,2           |
| III    | 2,943   |       |                |                |
|        |         | 5,886 | 1,81           | 40,6           |
| IV     | -2,943  |       |                |                |
|        |         | 3,0   | 1,85           | 32,2           |
| V      | -11,800 |       |                |                |
|        |         | 9,88  | Luft           | -              |
| VI     | 7,286   |       |                |                |
|        |         | 7,286 | 1,52           | 64,1           |
| 1'     | (plan)  |       |                |                |

**14.** Bildübertragungssystem nach Anspruch 5 oder 8, **gekennzeichnet durch** die folgenden Daten:

| Fläche | Radius | Dicke | Brechungsindex | Abbe'sche Zahl |
|--------|--------|-------|----------------|----------------|
|        |        |       |                |                |
| 1      | (plan) |       |                |                |
|        |        | 5,309 | 1,62           | 36,4           |
| I      | -5,309 |       |                |                |
|        |        | 6,89  | Luft           | ---            |
| II     | 6,923  |       |                |                |
|        |        | 1,2   | 1,64           | 60,1           |
| III    | -1,693 |       |                |                |
|        |        | 2,4   | 1,66           | 50,9           |

**EP 1 159 643 B1**

(fortgesetzt)

| Fläche | Radius | Dicke | Brechungsindex | Abbe'sche Zahl |
|---|---|---|---|---|
| IV | 1,693 | | | |
| | | 1,2 | 1,64 | 50,1 |
| V | -6,923 | | | |
| | | 6,89 | Luft | --- |
| VI | 5,309 | | | |
| | | 5,309 | 1,62 | 36,4 |
| 1' | (plan) | | | |

15. Bildübertragungssystem nach Anspruch 5 oder 8, **gekennzeichnet durch** die folgenden Daten:

| Fläche | Radius | Dicke | Brechungsindex | Abbe'sche Zahl |
|---|---|---|---|---|
| | | | | |
| 1 | (plan) | | | |
| | | 5,085 | 1,62 | 36,4 |
| I | -5,085 | | | |
| | | 6,71 | Luft | --- |
| II | 6,043 | | | |
| | | 1,00 | 1,72 | 50,4 |
| III | -2,512 | | | |
| | | 2,40 | 1,81 | 40,6 |
| IV | 2,512 | | | |
| | | 1,00 | 1,72 | 50,4 |
| V | -6,043 | | | |
| | | 6,71 | Luft | --- |
| VI | 5,085 | | | |
| | | 5,085 | 1,62 | 36,4 |
| 1' | (plan) | | | |

16. Verfahren zur Herstellung einer Stablinse für ein Bildübertragungssystem nach mindestens einem der Ansprüche 1 bis 15,
**gekennzeichnet durch**,
die Verfahrensschritte:

    a) Herstellen einer Glaskugel, deren Radius dem Krümmungsradius der konvexen Endfläche der Stablinse (2) entspricht und
    b) Ausarbeiten eines bikonvexen zylindrischen Glasstabes aus der Glaskugel **durch** Entnehmen eines Bohrkerns **durch** den Mittelpunkt der Glaskugel und
    c) Halbieren des bikonvexen zylindrischen Glasstabes entlang dessen Mittelebene (1).

17. Endoskop mit mindestens einem Bildübertragungssystem nach einem der Ansprüche 1 bis 15.

18. Endoskop mit mindestens zwei Bildübertragungssystemen nach einem der Ansprüche 1 bis 15, **dadurch gekennzeichnet, daß** die als plankonvexe Linsen ausgebildeten Stablinsen (2) zweier direkt hintereinander angeordneter Bildübertragungssysteme über ihre planen Endflächen miteinander verkittet sind.

13

**19.** Endoskop mit einem Objektiv zur Erzeugung eines Zwischenbildes in einer ersten Zwischenbildebene sowie mit mindestens zwei Bildübertragungssystemen zur Weiterleitung des Zwischenbildes, jeweils bestehend aus zwei Stablinsen und mindestens einem weiteren Linsensystem, wobei jeweils zwei direkt hintereinander angeordnete Bildübertragungssysteme eine gemeinsame Zwischenbildebene besitzen, **dadurch gekennzeichnet, daß** bei zwei hintereinander angeordneten Bildübertragungssystemen die aneinander angrenzenden Stablinsen (2) als freistehende einstückige bikonvexe Stablinse ausgebildet sind, wobei die Länge der einstückig bikonvexen Stablinse doppelt so groß ist, wie der Krümmungsradius der beiden konvexen Endflächen und die Zwischenbildebene symmetrisch zu den beiden konvexen Endflächen in der Mittelebene der bikonvexen Stablinse liegt, und dadurch, daß das mindestens eine weitere Linsensystem (3) symmetrisch bezüglich einer Mittelebene zwischen den beiden Stablinsen (2) eines jeden Bildübertragungssystems angeordnet ist.

**20.** Endoskop nach Anspruch 19, **dadurch gekennzeichnet, daß** das weitere Linsensystem (3) des Bildübertragungssystems aus mindestens drei Linsen besteht.

**21.** Endoskop nach Anspruch 20, **dadurch gekennzeichnet, daß** das weitere Linsensystem (3) des Bildübertragungssystems symmetrisch bezüglich der Mittelebene aufgebaut ist, wobei die Brechkraft der beiden äußeren Linsen (5) des weiteren Linsensystems (3) das entgegengesetzte Vorzeichen zu der der mindestens einen mittleren Linse (6) hat.

**22.** Endoskop nach mindestens einem der Ansprüche 19 bis 21, **dadurch gekennzeichnet, daß** das weitere Linsensystem (3) des Bildübertragungssystems als aus drei miteinander verkitteten Linsen bestehendes Triplet (4) ausgebildet ist.

**23.** Endoskop nach Anspruch 19 oder 20, **dadurch gekennzeichnet, daß** das weitere Linsensystem (3) des Bildübertragungssystems als zwei aus jeweils zwei miteinander verkitteten Linsen bestehende Dublets (8) ausgebildet ist.

**24.** Endoskop nach mindestens einem der Ansprüche 20 bis 23, **dadurch gekennzeichnet, daß** unter der Bedingung

$$n_m < n_a$$

die äußeren Linsen (5) des weiteren Linsensystems (3) des Bildübertragungssystems als konvex/konkave Meniskuslinsen und die eine (Triplet 4) oder zwei (Dublets 8) mittlere(n) Linse(n) (6) als bikonvexe oder plankonvexe Linse(n) ausgebildet sind,
wobei

   $n_m$ der Brechungsindex der mittleren Linse(n) (6) und
   $n_a$ der Brechungsindex der äußeren Linsen (5) ist.

**25.** Endoskop nach mindestens einem der Ansprüche 20 bis 23, **dadurch gekennzeichnet, daß** unter der Bedingung

$$n_m > n_a$$

die äußeren Linsen (5) des weiteren Linsensystems (3) des Bildübertragungssystems als bikonvexe oder plankonvexe Linsen und die eine (Triplet 4) oder zwei (Dublets 8) mittlere(n) Linse(n) (6) als bikonkave, plankonkave, plankonvexe oder konvex/konkave Linse(n) ausgebildet sind,
wobei

   $n_m$ der Brechungsindex der mittleren Linse(n) (6) und
   $n_a$ der Brechungsindex der äußeren Linsen (5) ist.

**26.** Endoskop nach Anspruch 22, **dadurch gekennzeichnet, daß** die mittlere Linse (6) des weiteren Linsensystems (3) des Bildübertragungssystems als bikonvexe Linse ausgebildet ist, deren Länge doppelt so groß ist wie der Krümmungsradius ihrer beiden Endflächen.

**Claims**

1.  Image transmission system for endoscopes and such periscopes for the purpose of transmitting an intermediate image generated by an objective in a first intermediate image plane from an intermediate image plane to the respective next intermediate image plane, having two rod lenses (2) and at least one further lens system (3), in which the two rod lenses (2) are designed as planoconvex lenses of identical length whose lengths correspond in each case to the radius of curvature of their convex end faces, the plane end face of at least one of the planoconvex rod lenses (2) forming the start and/or the end of the respective image transmission system, and two rod lenses (2) being arranged facing one another with their convex end faces, and the at least one further lens system (3) being arranged between the two rod lenses (2).

2.  Image transmission system according to Claim 1, **characterized in that** the at least one further lens system (3) is arranged symmetrically with reference to a centre plane between the two rod lenses (2).

3.  Image transmission system according to Claim 1 or 2, **characterized in that** the further lens system (3) consists of at least three lenses.

4.  Image transmission system according to Claim 3, **characterized in that** the further lens system (3) is constructed symmetrically with reference to the centre plane, the refractive power of the two outer lenses (5) of the further lens system (3) having the opposite sign to that of the at least one middle lens (6).

5.  Image transmission system according to at least one of Claims 1 to 4, **characterized in that** the further lens system (3) is constructed as a triplet (4) consisting of three mutually cemented lenses.

6.  Image transmission system according to at least one of Claims 1 to 4, **characterized in that** the further lens system (3) is constructed as two doublets (8) consisting of in each case two mutually cemented lenses.

7.  Image transmission system according to at least one of Claims 3 to 6, **characterized in that**, under the condition

$$n_m < n_a ,$$

the outer lenses (5) of the further lens system (3) are designed as convex/concave meniscus lenses, and the one (triplet 4) or two (doublets 8) middle lens(es) (6) are constructed as biconvex or planoconvex lens(es),
$n_m$ being the refractive index of the middle lens(es) (6), and
$n_a$ being the refractive index of the outer lenses (5).

8.  Image transmission system according to at least one of Claims 3 to 6, **characterized in that**, under the condition

$$n_m > n_a ,$$

the outer lenses (5) of the further lens system (3) are designed as biconvex or planoconvex lenses, and the one (triplet 4) or two (doublets 8) middle lens(es) (6) are designed as biconcave, planoconcave or convex/concave lens(es),
$n_m$ being the refractive index of the middle lens(es) (6), and
$n_a$ being the refractive index of the outer lenses (5).

9.  Image transmission system according to Claim 5, **characterized in that** the middle lens (6) of the further lens system (3) is designed as a biconvex lens whose length is twice as large as the radius of curvature of its two end faces.

10. Image transmission system according to Claim 5 or 7, **characterized by** the following data:

| Face | Radius | Thickness | Refractive index | Abbe dispersion number |
|------|--------|-----------|------------------|------------------------|
|      |        |           |                  |                        |
| 1    | (plane) |          |                  |                        |
|      |        | 4.664     | 1.52             | 64.1                   |
| I    | -4.664 |           |                  |                        |
|      |        | 7.5       | Air              | -                      |
| II   | 5.158  |           |                  |                        |
|      |        | 1.4       | 1.85             | 32.2                   |
| III  | 2.585  |           |                  |                        |
|      |        | 1.44      | 1.62             | 53.1                   |
| IV   | -2.585 |           |                  |                        |
|      |        | 1.4       | 1.85             | 32.2                   |
| V    | -5.158 |           |                  |                        |
|      |        | 7.5       | Air              | -                      |
| VI.  | 4.664  |           |                  |                        |
|      |        | 4.664     | 1.52             | 64.1                   |
| 1'   | (plane) |          |                  |                        |

**11.** Image transmission system according to Claim 5 or 7, **characterized by** the following data:

| Face | Radius | Thickness | Refractive index | Abbe dispersion number |
|------|--------|-----------|------------------|------------------------|
|      |        |           |                  |                        |
| 1    | (plane) |          |                  |                        |
|      |        | 4.664     | 1.52             | 64.1                   |
| I    | -4.664 |           |                  |                        |
|      |        | 7.36      | Air              | -                      |
| II   | 6.467  |           |                  |                        |
|      |        | 1.33      | 1.85             | 32.2                   |
| III  | 2.661  |           |                  |                        |
|      |        | 2.16      | 1.72             | 47.9                   |
| IV   | -2.661 |           |                  |                        |
|      |        | 1.33      | 1.85             | 32.2                   |
| V    | -6.467 |           |                  |                        |
|      |        | 7.36      | Air              | -                      |
| VI   | 4.664  |           |                  |                        |
|      |        | 4.664     | 1.52             | 64.1                   |
| 1'   | (plane) |          |                  |                        |

**12.** Image transmission system according to Claim 9, **characterized by** the following data:

| Face | Radius | Thickness | Refractive index | Abbe dispersion number |
|------|--------|-----------|------------------|------------------------|
|      |        |           |                  |                        |
| 1    | (plane) |          |                  |                        |
|      |        | 8.785     | 1.62             | 36.4                   |
| I    | -8.785 |           |                  |                        |
|      |        | 8.36      | Air              | -                      |
| II   | 6.300  |           |                  |                        |
|      |        | 2.77      | 1.85             | 32.2                   |
| III  | 3.208  |           |                  |                        |
|      |        | 6.416     | 1.57             | 57.5                   |
| IV   | -3.208 |           |                  |                        |
|      |        | 2.77      | 1.85             | 32.2                   |
| V    | -6.300 |           |                  |                        |
|      |        | 8.36      | Air              | -                      |
| VI   | 8.785  |           |                  |                        |
|      |        | 8.785     | 1.62             | 36.4                   |
| 1'   | (plane) |          |                  |                        |

**13.** Image transmission system according to Claim 9, **characterized by** the following data:

| Face | Radius | Thickness | Refractive index | Abbe dispersion number |
|------|--------|-----------|------------------|------------------------|
|      |        |           |                  |                        |
| 1    | (plane) |          |                  |                        |
|      |        | 7.286     | 1.52             | 64.1                   |
| I    | -7.286 |           |                  |                        |
|      |        | 9.88      | Air              | -                      |
| II   | 11.800 |           |                  |                        |
|      |        | 3.0       | 1.85             | 32.2                   |
| III  | 2.943  |           |                  |                        |
|      |        | 5.886     | 1.81             | 40.6                   |
| IV   | -2.943 |           |                  |                        |
|      |        | 3.0       | 1.85             | 32.2                   |
| V    | -11.800 |          |                  |                        |
|      |        | 9.88      | Air              | -                      |
| VI   | 7.286  |           |                  |                        |
|      |        | 7.286     | 1.52             | 64.1                   |
| 1'   | (plane) |          |                  |                        |

**14.** Image transmission system according to Claim 5 or 8, **characterized by** the following data:

17

| Face | Radius | Thickness | Refractive index | Abbe dispersion number |
|------|--------|-----------|------------------|------------------------|
|      |        |           |                  |                        |
| 1    | (plane)|           |                  |                        |
|      |        | 5.309     | 1.62             | 36.4                   |
| I    | -5.309 |           |                  |                        |
|      |        | 6.89      | Air              | -                      |
| II   | 6.923  |           |                  |                        |
|      |        | 1.2       | 1.64             | 60.1                   |
| III  | -1.693 |           |                  |                        |
|      |        | 2.4       | 1.66             | 50.9                   |
| IV   | 1.693  |           |                  |                        |
|      |        | 1.2       | 1.64             | 50.1                   |
| V    | -6.923 |           |                  |                        |
|      |        | 6.89      | Air              | -                      |
| VI   | 5.309  |           |                  |                        |
|      |        | 5.309     | 1.62             | 36.4                   |
| 1'   | (plane)|           |                  |                        |

**15.** Image transmission system according to Claim 5 or 8, **characterized by** the following data:

| Face | Radius | Thickness | Refractive index | Abbe dispersion number |
|------|--------|-----------|------------------|------------------------|
|      |        |           |                  |                        |
| 1    | (plane)|           |                  |                        |
|      |        | 5.085     | 1.62             | 36.4                   |
| I    | -5.085 |           |                  |                        |
|      |        | 6.71      | Air              | -                      |
| II   | 6.043  |           |                  |                        |
|      |        | 1.00      | 1.72             | 50.4                   |
| III  | -2.512 |           |                  |                        |
|      |        | 2.40      | 1.81             | 40.6                   |
| IV   | 2.512  |           |                  |                        |
|      |        | 1.00      | 1.72             | 50.4                   |
| V    | -6.043 |           |                  |                        |
|      |        | 6.71      | Air              | -                      |
| VI   | 5.085  |           |                  |                        |
|      |        | 5.085     | 1.62             | 36.4                   |
| 1'   | (plane)|           |                  |                        |

**16.** Method for producing a rod lens for an image transmission system according to at least one of Claims 1 to 15, **characterized by** the following method steps:

a) producing a glass ball whose radius corresponds to the radius of curvature of the convex end face of the rod lens (2), and

b) preparing a biconvex cylindrical glass rod from the glass ball by removing a drilled core through the centre of the glass ball, and

c) halving the biconvex cylindrical glass rod along its centre plane (1).

**17.** Endoscope having at least one image transmission system according to one of Claims 1 to 15.

**18.** Endoscope having at least two image transmission systems according to one of Claims 1 to 15, **characterized in that** the rod lenses (2), designed as planoconvex lenses, of two image transmission systems arranged directly one behind another are mutually cemented via their plane end faces.

**19.** Endoscope having an objective for generating an intermediate image in a first intermediate image plane, and having at least two image transmission systems for relaying the intermediate image, in each case comprising two rod lenses and at least one further lens system, in each case two image transmission systems arranged directly one behind another having a common intermediate image plane, **characterized in that** in the case of two image transmission systems arranged one behind another the juxtaposed rod lenses (2) are designed as a freestanding unipartite biconvex rod lens, the length of the unipartite biconvex rod lens being twice as large as the radius of curvature of the two convex end faces, and the intermediate image plane being situated symmetrically in relation to the two convex end faces in the centre plane of the biconvex rod lens, and **in that** the at least one further lens system (3) is arranged symmetrically with reference to a centre plane between the two rod lenses (2) of each image transmission system.

**20.** Endoscope according to Claim 19, **characterized in that** the further lens system (3) of the image transmission system consists of at least three lenses.

**21.** Endoscope according to Claim 20, **characterized in that** the further lens system (3) of the image transmission system is constructed symmetrically with reference to the centre plane, the refractive power of the two outer lenses (5) of the further lens system (3) having the opposite sign to that of the at least one middle lens (6).

**22.** Endoscope according to at least one of Claims 19 to 21, **characterized in that** the further lens system (3) of the image transmission system is designed as a triplet (4) consisting of three mutually cemented lenses.

**23.** Endoscope according to Claim 19 or 20, **characterized in that** the further lens system (3) of the image transmission system is designed as two doublets (8) consisting of in each case two mutually cemented lenses.

**24.** Endoscope according to at least one of Claims 20 to 23, **characterized in that**, under the condition

$$n_m < n_a,$$

the outer lenses (5) of the further lens system (3) of the image transmission system are designed as convex/concave meniscus lenses, and the one (triplet 4) or two (doublets 8) middle lens(es) (6) are designed as biconvex or planoconvex lens(es),

$n_m$ being the refractive index of the middle lens(es) (6), and

$n_a$ being the refractive index of the outer lenses (5).

**25.** Endoscope according to at least one of Claims 20 to 23, **characterized in that**, under the condition

$$n_m > n_a,$$

the outer lenses (5) of the further lens system (3) of the image transmission system are designed as biconvex or planoconvex lenses, and the one (triplet 4) or two (doublets 8) middle lens(es) (6) are designed as biconcave, planoconcave, planoconvex or convex/concave lens(es),

$n_m$ being the refractive index of the middle lens(es) (6), and

$n_a$ being the refractive index of the outer lenses (5).

**EP 1 159 643 B1**

**26.** Endoscope according to Claim 22, **characterized in that** the middle lens (6) of the further lens system (3) of the image transmission system is designed as a biconvex lens whose length is twice as large as the radius of curvature of its two end faces.

**Revendications**

**1.** Système de transmission d'images pour endoscopes et périscopes analogues en vue de la transmission d'images d'une image intermédiaire générée par un objectif dans un premier plan d'image intermédiaire depuis un plan d'image intermédiaire vers un plan d'image intermédiaire suivant respectif, comprenant deux lentilles sous forme de tige (2) et au moins un autre système de lentilles (3), dans lequel les deux lentilles sous forme de tige (2) sont réalisées sous la forme de lentilles plan convexes de même longueur, dont les longueurs correspondent respectivement au rayon de courbure de leurs surfaces terminales convexes, la surface terminale plane d'au moins une des lentilles sous forme de tige plan convexe (2) formant le début et/ou l'extrémité du système de transmission d'images respectif et les deux lentilles sous forme de tige (2) étant disposées avec leurs surfaces terminales convexes tournées l'une vers l'autre et le au moins un autre système de lentilles (3) étant disposé entre les deux lentilles sous forme de tige (2).

**2.** Système de transmission d'images selon la revendication 1, **caractérisé en ce que** le au moins un autre système de lentilles (3) est disposé symétriquement par rapport à un plan médian entre les deux lentilles sous forme de tige (2).

**3.** Système de transmission d'images selon la revendication 1 ou 2, **caractérisé en ce que** l'autre système de lentilles (3) se compose d'au moins trois lentilles.

**4.** Système de transmission d'images selon la revendication 3, **caractérisé en ce que** l'autre système de lentilles (3) est disposé symétriquement par rapport au plan médian, l'indice de réfraction des deux lentilles extérieures (5) de l'autre système de lentilles (3) est de signe opposé à au moins une lentille médiane (6).

**5.** Système de transmission d'images selon au moins une des revendications 1 à 4, **caractérisé en ce que** l'autre système de lentilles (3) est réalisé sous la forme d'un triplet (4) se composant de trois lentilles scellées entre elles.

**6.** Système de transmission d'images selon au moins une des revendications 1 à 4, **caractérisé en ce que** l'autre système de lentilles (3) est réalisé sous la forme de deux doublets (8) se composant respectivement de deux lentilles scellées entre elles.

**7.** Système de transmission d'images selon au moins une des revendications 3 à 6, **caractérisé en ce que** sous la condition

$$n_m < n_a$$

les lentilles extérieures (5) de l'autre système de lentilles (3) sont réalisées sous la forme de lentilles ménisques convexes/concaves et l'une (triplet 4) ou deux (doublets 8) des lentilles intermédiaires (6) sont réalisées sous la forme de lentilles biconvexes ou plan convexes,
$n_m$ étant l'indice de réfraction des lentilles intermédiaires (6) et
$n_a$ étant l'indice de réfraction des lentilles extérieures (5).

**8.** Système de transmission d'images selon au moins une des revendications 3 à 6, **caractérisé en ce que**, sous la condition

$$n_m > n_a$$

les lentilles extérieures (5) de l'autre système de lentilles (3) sont réalisées sous la forme de lentilles biconvexes ou plan convexes et l'une (triplet 4) ou deux (doublets 8) des lentilles intermédiaires (6) sont réalisées sous la forme de lentilles biconcaves, plan concaves ou convexes/concaves,
$n_m$ étant l'indice de réfraction des lentilles intermédiaires (6) et

$n_a$ étant l'indice de réfraction des lentilles extérieures (5).

9. Système de transmission d'images selon la revendication 5, **caractérisé en ce que** la lentille intermédiaire (6) de l'autre système de lentilles (3) est réalisée en tant que lentille biconvexe, dont la longueur est le double du rayon de courbure de ses deux surfaces terminales.

10. Système de transmission d'images selon la revendication 5 ou 7, **caractérisé par** les données suivantes:

| Surface | Rayon | Epaisseur | Indice de réfraction | Nombre d'Abbe |
|---|---|---|---|---|
| | | | | |
| 1 | (plan) | | | |
| | | 4,664 | 1,52 | 64,1 |
| I | -4,664 | | | |
| | | 7,5 | Air | - |
| II | 5,158 | | | |
| | | 1,4 | 1,85 | 32,2 |
| III | 2,585 | | | |
| | | 1,44 | 1,62 | 53,1 |
| IV | -2,585 | | | |
| | | 1,4 | 1,85 | 32,2 |
| V | -5,158 | | | |
| | | 7,5 | Air | - |
| VI | 4,664 | | | |
| | | 4,664 | 1,52 | 64,1 |
| 1' | (plan) | | | |

11. Système de transmission d'images selon la revendication 5 ou 7, **caractérisé par** les données suivantes:

| Surface | Rayon | Epaisseur | Indice de réfraction | Nombre d'Abbe |
|---|---|---|---|---|
| | | | | |
| 1 | (plan) | | | |
| | | 4,664 | 1,52 | 64,1 |
| I | -4,664 | | | |
| | | 7,36 | Air | - |
| II | 6,467 | | | |
| | | 1,33 | 1,85 | 32,2 |
| III | 2,661 | | | |
| | | 2,16 | 1,72 | 47,9 |
| IV | -2,661 | | | |
| | | 1,33 | 1,85 | 32,2 |
| V | -6,467 | | | |
| | | 7,36 | Air | - |
| VI | 4,664 | | | |

(suite)

| Surface | Rayon | Epaisseur | Indice de réfraction | Nombre d'Abbe |
|---------|-------|-----------|----------------------|---------------|
|  |  | 4,664 | 1,52 | 64,1 |
| 1' | (plan) |  |  |  |

**12.** Système de transmission d'images selon la revendication 9, **caractérisé par** les données suivantes

| Surface | Rayon | Epaisseur | Indice de réfraction | Nombre d'Abbe |
|---------|-------|-----------|----------------------|---------------|
|  |  |  |  |  |
| 1 | (plan) |  |  |  |
|  |  | 8,785 | 1,62 | 36,4 |
| I | -8,785 |  |  |  |
|  |  | 8,36 | Air | - |
| II | 6,300 |  |  |  |
|  |  | 2,77 | 1,85 | 32,2 |
| III | 3,208 |  |  |  |
|  |  | 6,416 | 1,57 | 57,5 |
| IV | -3,208 |  |  |  |
|  |  | 2,77 | 1,85 | 32,2 |
| V | -6,300 |  |  |  |
|  |  | 8,36 | Air | - |
| VI 8,785 |  |  |  |  |
|  |  | 8,785 | 1,62 | 36,4 |
| 1' | (plan) |  |  |  |

**13.** Système de transmission d'images selon la revendication 9, **caractérisé par** les données suivantes :

| Surface | Rayon | Epaisseur | Indice de réfraction | Nombre d'Abbe |
|---------|-------|-----------|----------------------|---------------|
|  |  |  |  |  |
| 1 | (plan) |  |  |  |
|  |  | 7,286 | 1,52 | 64,1 |
| I | -7,286 |  |  |  |
|  |  | 9,88 | Air | - |
| II | 11,800 |  |  |  |
|  |  | 3,0 | 1,85 | 32,2 |
| III | 2,943 |  |  |  |
|  |  | 5,886 | 1,81 | 40,6 |
| IV | -2,943 |  |  |  |
|  |  | 3,0 | 1,85 | 32,2 |
| V | -11,800 |  |  |  |
|  |  | 9,88 | Air | - |

(suite)

| Surface | Rayon | Epaisseur | Indice de réfraction | Nombre d'Abbe |
|---------|-------|-----------|----------------------|---------------|
| VI | 7,286 | | | |
| | | 7,286 | 1,52 | 64,1 |
| 1' | (plan) | | | |

**14.** Système de transmission d'images selon la revendication 5 ou 8, **caractérisé par** les données suivantes:

| Surface | Rayon | Epaisseur | Indice de réfraction | Nombre d'Abbe |
|---------|-------|-----------|----------------------|---------------|
| | | | | |
| 1 | (plan) | | | |
| | | 5,309 | 1,62 | 36,4 |
| I | -5,309 | | | |
| | | 6,89 | Air | - |
| II | 6,923 | | | |
| | | 1,2 | 1,64 | 60,1 |
| III | -1,693 | | | |
| | | 2,4 | 1,66 | 50,9 |
| IV | 1,693 | | | |
| | | 1,2 | 1,64 | 50,1 |
| V | -6,923 | | | |
| | | 6,89 | Air | - |
| VI | 5,309 | | | |
| | | 5,309 | 1,62 | 36,4 |
| 1' | (plan) | | | |

**15.** Système de transmission d'images selon la revendication 5 ou 8, **caractérisé par** les données suivantes:

| Surface | Rayon | Epaisseur | Indice de réfraction | Nombre d'Abbe |
|---------|-------|-----------|----------------------|---------------|
| | | | | |
| 1 | (plan) | | | |
| | | 5,085 | 1,62 | 36,4 |
| I | -5,085 | | | |
| | | 6,71 | Air | - |
| II | 6,043 | | | |
| | | 1,00 | 1,72 | 50,4 |
| III | -2,512 | | | |
| | | 2,40 | 1,81 | 40,6 |
| IV | 2,512 | | | |
| | | 1,00 | 1,72 | 50,4 |
| V | -6,043 | | | |

(suite)

| Surface | Rayon | Epaisseur | Indice de réfraction | Nombre d'Abbe |
|---------|-------|-----------|----------------------|---------------|
|  |  | 6,75 | Air | - |
| VI | 5,085 |  |  |  |
|  |  | 5,085 | 1,62 | 36,4 |
| 1' | (plan) |  |  |  |

16. Procédé de fabrication d'une lentille sous forme de tige pour un système de transmission d'images selon au moins une des revendications 1 à 15, **caractérisé par** les étapes suivantes :

   a) fabrication d'une bille de verre, dont le rayon correspond au rayon de courbure de la surface terminale convexe de la lentille sous forme de tige (2) et
   b) façonnage d'une tige de verre cylindrique biconvexe à partir de la bille de verre par prélèvement d'une carotte à travers le point milieu de la bille de verre et
   c) division par deux de la tige de verre cylindrique biconvexe le long du plan médian de celle-ci (1).

17. Endoscope équipé d'au moins un système de transmission d'images selon une des revendications 1 à 15.

18. Endoscope équipé d'au moins deux systèmes de transmission d'images selon une des revendications 1 à 15, **caractérisé en ce que** les lentilles sous forme de tige (2) réalisées sous la forme de lentilles plans convexes de deux systèmes de transmission d'images disposés directement en succession sont scellées les unes aux autres par l'intermédiaire de leurs surfaces terminales planes.

19. Endoscope équipé d'un objectif en vue de la génération d'une image intermédiaire dans un premier plan d'image intermédiaire ainsi que d'au moins deux systèmes de transmission d'images en vue de la transmission de l'image intermédiaire, se composant respectivement de deux lentilles sous forme de tige et d'au moins un autre système de lentilles, de systèmes de transmission d'images, disposés directement en succession possédant un plan d'image intermédiaire commun, **caractérisé en ce que** dans le cas de deux systèmes de transmission d'images disposés en succession, les lentilles sous forme de tige (2) adjacentes sont réalisées sous la forme d'une lentille sous forme de tige biconvexe unitaire isolée, la longueur de la lentille sous forme de tige biconvexe unitaire est le double du rayon de courbure des deux surfaces terminales convexes et le plan d'image intermédiaire se trouve symétrique par rapport aux deux surfaces terminales convexes dans le plan médian de la lentille sous forme de tige biconvexe, et **en ce que** le au moins un autre système de lentilles (3) est disposé symétrique par rapport à un plan médian entre les deux lentilles sous forme de tige (2) de chaque système de transmission d'images.

20. Endoscope selon la revendication 19, **caractérisé en ce que** l'autre système de lentilles (3) du système de transmission d'images se compose d'au moins trois lentilles.

21. Endoscope selon la revendication 20, **caractérisé en ce que** l'autre système de lentilles (3) du système de transmission d'images est réalisé symétriquement par rapport au plan médian, l'indice de réfraction des deux lentilles extérieures (5) de l'autre système de lentilles (3) est de signe opposé à celui de la au moins une lentille intermédiaire (6).

22. Endoscope selon au moins une des revendications 19 à 21, **caractérisé en ce que** l'autre système de lentilles (3) du système de transmission d'images est réalisé sous la forme d'un triplet (4) se composant de trois lentilles scellées entre elles.

23. Endoscope selon la revendication 19 ou 20, **caractérisé en ce que** l'autre système de lentilles (3) du système de transmission d'images est réalisé sous la forme de deux doublets (8) se composant respectivement de deux lentilles scellées entre elles.

24. Endoscope selon au moins une des revendications 20 à 23, **caractérisé en ce que** sous la condition

$$n_m < n_a$$

**24**

les lentilles extérieures (5) de l'autre système de lentilles (3) du système de transmission d'images sont réalisées sous la forme de lentilles ménisques convexes/concaves et l'une (triplet 4) ou deux (doublets 8) lentilles intermédiaires (6) sont réalisées sous la forme de lentilles biconvexes ou plans convexes,

$n_m$ étant l'indice de réfraction des lentilles intermédiaires (6) et

$n_a$ étant l'indice de réfraction des lentilles extérieures (5).

25. Endoscope selon au moins une des revendications 20 à 23, **caractérisé en ce que** sous la condition

$$n_m > n_a$$

les lentilles extérieures (5) de l'autre système de lentilles (3) du système de transmission d'images sont réalisées sous la forme de lentilles biconvexes ou plans convexes et l'une (triplet 4) ou deux (doublets 8) lentilles intermédiaires (6) sont réalisées sous la forme de lentilles biconcaves, plans concaves, plans convexes ou convexes/concaves,

$n_m$ étant l'indice de réfraction des lentilles intermédiaires (6) et

$n_a$ étant l'indice de réfraction des lentilles extérieures (5).

26. Endoscope selon la revendication 22, **caractérisé en ce que** la lentille intermédiaire (6) de l'autre système de lentilles (3) du système de transmission d'images est réalisée sous la forme d'une lentille biconvexe, dont la longueur est le double du rayon de courbure de ses deux surfaces terminales.

Fig.1

Fig. 2

Fig. 3

Fig. 4

Fig. 5